# EUROPÄISCHE PATENTSCHRIFT

(11) **EP 3 626 983 B1**
(45) Veröffentlichungstag und Bekanntmachung des Hinweises auf die Patenterteilung: **15.06.2022**
(21) Anmeldenummer: 19154804.9
(22) Anmeldetag: 31.01.2019
(51) Int. Cl.: F16B 31/04, E04D 3/36, F16B 5/02, F16B 25/00, F16B 33/00

(54) **BEFESTIGUNGSELEMENT UND VERFAHREN ZUM BEFESTIGEN VON DÄMMSTOFF**
FIXING ELEMENT AND METHOD FOR FIXING INSULATING MATERIAL
ÉLÉMENT DE FIXATION ET PROCÉDÉ DE FIXATION D'UN MATÉRIAU ISOLANT

(30) Priorität: 19.09.2018 EP 18195424
(43) Veröffentlichungstag der Anmeldung: 25.03.2020
(73) Patentinhaber: Van Roij Fasteners Europe B.V., 5753 DK Deurne (NL)
(72) Erfinder: Bellemakers, Christianus Maria, 5754 GR Deurne (NL); Werner, Jens, 58640 Iserlohn (DE)
(74) Vertreter: Patentanwälte Ruff, Wilhelm, Beier, Dauster & Partner mbB

(56) Entgegenhaltungen:
- EP-A1- 2 366 843
- WO-A1-89/02504
- DE-A1- 19 745 296
- DE-A1-102013 114 653

## Beschreibung

Die Erfindung betrifft ein Befestigungselement zum Befestigen von Dämmstoff an einem Untergrund, insbesondere auf einem Gebäudedach oder an einer Gebäudewand, mit einem Halteelement, das einen Halteteller und einen sich vom Halteteller aus erstreckenden rohrartigen Halteabschnitt aufweist. Das Halteelement weist eine sich durch den Halteteller und den Halteabschnitt erstreckende Aufnahmebohrung auf. Eine abschnittsweise in der Aufnahmebohrung angeordnete Schraube weist einen Schraubenkopf mit einer Antriebsausbildung und einen Schaft auf, der wenigstens abschnittsweise mit einem Gewinde versehen ist. Die Erfindung betrifft auch ein Verfahren zum Befestigen von Dämmstoff.

Aus der Offenlegungsschrift DE 39 13 298 A1 ist ein Befestigungselement zum Befestigen von Dämmstoff bekannt, das einen Halteteller und einen rohrartigen Halteabschnitt aufweist. Der Halteteller und das Halteelement weisen eine Aufnahmebohrung auf, in welcher eine Schraube angeordnet ist. Weiterhin ist in dem Halteabschnitt eine Schraubenmutter angeordnet, die mit einem Gewinde der Schraube zusammenwirkt, um den Halteteller in Richtung auf den Untergrund zu bewegen und eine Oberseite des Dämmstoffs im Bereich des Haltetellers vorzuspannen.

Aus der europäischen Offenlegungsschrift EP 2 366 843 A1 ist ein Befestigungselement bekannt, das zum Befestigen von Dämmstoff an einem Untergrund vorgesehen ist, wobei das Befestigungselement ein Halteelement, das einen Halteteller und einen sich vom Halteteller aus erstreckenden rohrartigen Halteabschnitt aufweist, wobei das Halteelement eine sich durch den Halteteller und den Halteabschnitt erstreckende Aufnahmebohrung aufweist, und eine abschnittsweise Aufnahmebohrung angeordnete Schraube aufweist, wobei die Schraube einen Schraubenkopf mit einer Antriebsausbildung und einen Schaft aufweist, der wenigstens abschnittsweise mit einem Gewinde versehen ist. Die Aufnahmebohrung hat einen sechseckigen Innenumfang und in der Aufnahmebohrung ist eine Sechskantmutter aufgenommen, durch die sich die Schraube hindurch erstreckt. Die Sechskantmutter verhindert, dass der Halteteller sich vom Untergrund wegbewegen kann, wenn die Schraube in den Untergrund eingeschraubt ist. Dadurch kann der Halteteller gegen den Dämmstoff vorgespannt werden.

Aus der deutschen Offenlegungsschrift DE 10 2013 114 653 A1 ist ein Verankerungssystem mit einem Hülsenelement und einer in dem Hülsenelement angeordneten Schraube bekannt. Das Hülsenelement wird in ein Bohrloch eingesetzt und die Schraube wird in das Hülsenelement eingeschraubt. Die Schraube weist im Bereich ihrer Spitze eine größere Gewindesteigung auf als an einem, dem Schraubenkopf zugewandten Endabschnitt des Gewindes. Beim Einschrauben der Schraube wird das Hülsenelement dadurch zusammengezogen und gespreizt.

Aus der internationalen Offenlegungsschrift WO 98/02504 ist ein weiteres Befestigungselement zum Befestigen von Dämmstoff an einem Untergrund mit einem Halteelement, das einen Halteteller und einen sich vom Halteteller aus erstreckenden rohrartigen Halteabschnitt aufweist, wobei das Halteelement eine sich durch den Halteteller und den Halteabschnitt erstreckende Aufnahmebohrung aufweist, und mit einer abschnittsweise in der Aufnahmebohrung angeordneten Schraube bekannt, wobei die Schraube einen Schraubenkopf mit einer Antriebsausbildung und einen Schaft aufweist, der wenigstens abschnittsweise mit einem Gewinde versehen ist. Die Schraube weist eine Bohrspitze auf, an die sich ein Gewinde mit einer ersten Steigung anschließt. Am Ende des Gewindes mit der ersten Steigung folgt ein zylindrischer platter, Abschnitt, wobei zwischen dem glatten Abschnitt und dem Schraubenkopf dann ein weiteres Gewinde mit einer zweiten Steigung angeordnet ist. Das Gewinde mit der zweiten Steigung ist gegenläufig zu dem Gewinde mit der ersten Steigung. Zwischen dem Gewinde mit der zweiten Steigung und dem Schraubenkopf kann ein weiteres Gewinde angeordnet sein, das gleichlaufend zu dem Gewinde mit der ersten Steigung ausgebildet ist und gegenüber dem Gewinde der ersten Steigung einen größeren Außendurchmesser aufweist.

Aus der deutschen Offenlegungsschrift DE 19745296 A1 ist ein Befestigungselement zum Befestigen von Dämmstoff an einem Untergrund mit einem Halteelement, das einen Halteteller und einen sich vom Halteteller aus erstreckenden rohrartigen Halteabschnitt aufweist bekannt, wobei das Halteelement eine sich durch den Halteteller und dem Halteabschnitt erstreckende Aufnahmebohrung aufweist, wobei weiter eine abschnittsweise in der Aufnahmebohrung angeordnete Schraube vorgesehen ist, wobei die Schraube einen Schraubenkopf mit einer Antriebsausbildung und einen Schaft aufweist, der wenigstens abschnittsweise mit einem Gewinde versehen ist. Ein im Dämmstoff angeordnetes Ende des rohrartigen Halteabschnitts ist mit schneidenförmigen Räumvorsprüngen versehen.

Mit der Erfindung soll ein Befestigungselement zum Befestigen von Dämmstoff an einem Untergrund, insbesondere auf einem Gebäudedach oder an einer Gebäudewand, dahingehend verbessert werden, dass eine vereinfachte Befestigung des Dämmstoffs möglich ist. Erfindungsgemäß ist hierzu ein Befestigungselement mit den Merkmalen von Anspruch 1 und ein Verfahren mit den Merkmalen von Anspruch 8 vorgesehen. Vorteilhafte Weiterbildungen sind in den Unteransprüchen angegeben.

Das erfindungsgemäße Befestigungselement ist zum Befestigen von Dämmstoff an einem Untergrund, insbesondere auf einem Gebäudedach oder an einer Gebäudewand, vorgesehen und weist ein Halteelement auf, das einen Halteteller und einen sich vom Halteteller aus erstreckenden rohrartigen Halteabschnitt aufweist, wobei das Halteelement eine sich durch den Halteteller und den Halteabschnitt erstreckende Aufnahmebohrung aufweist. Das Befestigungselement weist eine abschnittsweise in der Aufnahmebohrung angeordnete Schraube auf, wobei die Schraube einen Schraubenkopf mit einer Antriebsausbildung und einen Schaft aufweist, der wenigstens abschnittsweise mit einem Gewinde versehen ist. Gemäß der Erfindung weist das Gewinde mehrere Abschnitte mit unterschiedlichen Steigungen auf, wobei eine erste Steigung in einem vom freien Ende der Schraube, das dem Schraubenkopf gegenüberliegt, ausgehenden ersten Abschnitt größer ist als in einem zwischen dem schraubenkopfseitigen Ende des ersten Abschnitts und dem Schraubenkopf angeordneten zweiten Abschnitt.

Durch unterschiedliche Gewindeabschnitte des Gewindes der Schraube mit unterschiedlichen Steigungen, wobei eine erste Steigung ausgehend vom freien Ende der Schraube oder ausgehend von der Schraubenspitze größer ist als in einem zweiten Abschnitt, der auf den ersten Abschnitt folgt, lassen sich überraschenderweise mehrere Probleme, die beim Befestigen von Dämmstoff an einem Untergrund auftreten, lösen. Zum einen kann durch die unterschiedlichen Gewindesteigungen erreicht werden, dass der Halteteller automatisch in Richtung auf den Untergrund zubewegt wird, sobald das freie Ende der Schraube oder die Schraubenspitze in den Untergrund eingreift und somit der erste Abschnitt des Gewindes mit der ersten Steigung den Vorschub der Schraube relativ zum Untergrund bewirkt. Da die Steigung in diesem ersten Abschnitt des Gewindes der Schraube größer ist als in dem zweiten Abschnitt, der am Halteelement angreift, wird das Halteelement pro Umdrehung um den Differenzbetrag der Steigungen zwischen dem ersten Abschnitt des Gewindes und dem zweiten Abschnitt des Gewindes in Richtung auf den Untergrund bewegt. In sehr einfacher Weise, nämlich durch simples Einschrauben der Schraube in den Untergrund, kann dadurch eine Vorspannung zwischen dem Halteelement und dem Dämmstoff, speziell zwischen der Unterseite des Haltetellers und der Oberseite des Dämmstoffs, erzielt werden, so dass der Dämmstoff sicher am Untergrund befestigt ist. Darüber hinaus kann in sehr einfacher Weise festgestellt werden, wann die Mindesteinschraubtiefe der Schraube in den Untergrund erreicht ist. Denn das Halteelement wird ja, sobald die Schraube mit dem ersten Abschnitt des Gewindes in den Untergrund eingreift, pro Umdrehung um die Differenz der Steigungen zwischen dem ersten Abschnitt des Gewindes und dem zweiten Abschnitt des Gewindes, der am Halteelement angreift, in Richtung auf den Untergrund zu bewegt. Der Betrag, um den das Halteelement in Richtung auf den Untergrund zu bewegt wird, ist also proportional der Eindringtiefe der Schraube in den Untergrund. Wird der Halteteller des Halteelements lose auf die Oberseite des Dämmstoffs aufgesetzt, wenn sich das freie Ende der Schraube oder die Schraubenspitze auf dem Untergrund oder am Beginn einer Bohrung im Untergrund befindet, so kann also an dem Weg, um den der Halteteller die Oberseite des Dämmstoffs in Richtung auf den Untergrund zieht, abgelesen werden, ob die Schraube die vorgeschriebene Mindesteinschraubtiefe erreicht hat. Beispielsweise wird das Verhältnis der Steigungen zwischen dem ersten Abschnitt des Gewindes und dem zweiten Abschnitt des Gewindes so gewählt, dass eine Mindesteinschraubtiefe erreicht ist, wenn der Halteteller den Dämmstoff um 25 mm in Richtung auf den Untergrund zu eingedrückt hat. Das erfindungsgemäße Befestigungselement ist durch die spezielle Ausbildung der Schraube mit zwei Abschnitten mit unterschiedlichen Steigungen daher in besonderer Weise geeignet, die Befestigung von Dämmstoff zu vereinfachen und vor allem, um eine Kontrolle der Befestigung zu erleichtern. Ein Eingriff der Schraube mit dem zweiten Abschnitt des Gewindes am Halteelement kann in verschiedener Weise bewirkt werden. Beispielsweise können in der Aufnahmebohrung des Halteelements Sperrmittel vorgesehen sein oder der zweite Abschnitt des Gewindes der Schraube kann unmittelbar in Gewindeeingriff mit einem Abschnitt des Halteelements stehen.

In Weiterbildung der Erfindung ist zwischen dem ersten Abschnitt und dem zweiten Abschnitt ein Übergangsabschnitt angeordnet.

In diesem Übergangsabschnitt verändert sich die Steigung von der größeren Steigung des ersten Abschnitts zur kleineren Steigung des zweiten Abschnitts. Durch allmähliche Änderung der Steigung im Übergangsabschnitt kann die Schraube beispielsweise problemlos in das Halteelement eingeschraubt werden und auch Sperrmittel können sowohl am ersten Abschnitt, am Übergangsabschnitt und am zweiten Abschnitt des Gewindes angreifen.

In Weiterbildung der Erfindung erstreckt sich der zweite Abschnitt bis zum Schraubenkopf.

Auf diese Weise kann die Schraube auch für unterschiedliche Dicken von Dämmstoffen und unterschiedliche Längen der Halteelemente verwendet werden.

Gemäß der Erfindung sind in der Aufnahmebohrung Sperrmittel vorgesehen, die einerseits an dem Halteelement und andererseits an dem Gewinde der Schraube angreifen, um eine Bewegung des Haltetellers relativ zur Schraube in Richtung auf den Schraubenkopf zu zu sperren.

Mittels solcher Sperrmittel kann in einfacher Weise das Zurückrutschen des Halteelements in Richtung auf den Schraubenkopf zu verhindert werden. Die Sperrmittel können dabei in unterschiedlicher Weise ausgebildet sein, beispielsweise in Form von Sperrkugeln in einem Käfig oder auch in Form einer Schraubenfeder. Im Rahmen der Erfindung kann der Innendurchmesser der Schraubenfeder dabei größer sein als der Außendurchmesser des Gewindes, so dass die Schraubenfeder also über das Gewinde rutschen kann, um eine Relativbewegung des Halteelements in Richtung auf das freie Ende der Schraube oder die Schraubenspitze zu zu ermöglichen. Eine Verengung in der Aufnahmebohrung oder eine Buchse in der Aufnahmebohrung ist dann so gestaltet, dass die Schraubenfeder durch die Schwerkraft so verschoben wird, dass sie wieder in das Schraubengewinde eingreift. Auf diese Weise kann dann eine Bewegung des Halteelements oder des Haltetellers relativ zur Schraube vom Untergrund weg gesperrt werden.

Vorgesehen ist im Rahmen der Erfindung, dass die Sperrmittel ständig am Gewinde der Schraube angreifen. Die Sperrmittel weisen eine Schraubenfeder auf, wobei ein Innendurchmesser der Schraubenfeder größer als ein Kerndurchmesser des Gewindes der Schraube und kleiner als ein Außendurchmesser des Gewindes der Schraube ist. Die Schraubenfeder muss infolgedessen auf das Gewinde der Schraube aufgeschraubt werden und ein Nachrutschen der Schraubenfeder über das Gewinde der Schraube ist dann nicht möglich. Aufgrund der unterschiedlichen Steigungen zwischen dem ersten Abschnitt des Gewindes und dem zweiten Abschnitt des Gewindes auf der Schraube ist dadurch aber dennoch eine Relativbewegung zwischen Halteelement und Untergrund bzw. Dämmstoff beim Einschrauben der Schraube in den Untergrund möglich.

In Weiterbildung der Erfindung weist die Schraubenfeder weniger als einen Umlauf auf und ist als offener Ring ausgebildet.

Eine solche Ausbildung der Schraubenfeder hat sich als besonders vorteilhaft erwiesen. Die Ausbildung der Schraubenfeder als offener Ring verhindert ein Verhaken mehrerer Schraubenfedern, wenn diese zu mehreren in einem Behälter abgepackt sind. Auch wenn die Schraubenfeder weniger als einen Umlauf aufweist und als offener Ring ausgebildet ist, können dennoch ausreichende Haltekräfte zwischen dem Untergrund und dem Halteelement bzw. dem Dämmstoff übertragen werden.

In Weiterbildung der Erfindung läuft die Schraubenfeder um einen Winkel von mehr als 180° und weniger als 360°, insbesondere um einen Winkel zwischen 270° und 350°, insbesondere um einen Winkel von 315° um.

Ein Winkel von mehr als 180° genügt, um einen sicheren Eingriff der Schraubenfeder in das Gewinde der Schraube sicherzustellen. Als gut geeignet hat sich ein Winkel von 315° herausgestellt.

In Weiterbildung der Erfindung liegt eine Steigung der Schraubenfeder zwischen der Steigung des Gewindes der Schraube im ersten Abschnitt und der Steigung des Gewindes der Schraube im zweiten Abschnitt.

Auf diese Weise kann sichergestellt werden, dass die Schraubenfeder sowohl im ersten Abschnitt des Gewindes als auch im zweiten Abschnitt des Gewindes und gegebenenfalls auch im Übergangsabschnitt des Gewindes eingreifen kann. Eine Dicke des Drahts der Schraubenfeder wird dann so gewählt, dass etwas Spiel zwischen den Flanken des Gewindes und der Schraubenfeder vorliegt.

Bei einer nicht erfindungsgemäßen Ausgestaltung weist die Aufnahmebohrung im Halteelement eine Stufe oder eine Verengung auf, wobei ein Innendurchmesser der Aufnahmebohrung zwischen dem Halteteller und der Stufe oder Verengung größer ist als ein Durchmesser des Schraubenkopfs und wobei ein Innendurchmesser der Aufnahmebohrung an der Stufe oder Verengung kleiner ist als der Durchmesser des Schraubenkopfs und kleiner ist als der Außendurchmesser des Gewindes der Schraube.

Bei einer solchen Ausgestaltung von Schraube und Aufnahmebohrung des Halteelements kann auf Sperrmittel verzichtet werden. Das Gewinde der Schraube greift dann unmittelbar in die Stufe oder Verengung der Aufnahmebohrung des Halteelements ein. Aufgrund der unterschiedlichen Steigungen des Gewindes der Schraube im ersten Abschnitt und im zweiten Abschnitt kann dennoch eine Relativbewegung zwischen Halteelement und Dämmstoff bzw. Untergrund beim Eindrehen der Schraube in den Untergrund und gleichzeitigem Festhalten des Haltetellers in Umfangsrichtung erzielt werden. Das Befestigungselement kann in einem solchen Fall besonders einfach ausgestaltet werden, da separate Sperrmittel entfallen können. Dennoch kann eine zuverlässige Vorspannung auf die Oberseite des Dämmstoffs erzielt werden und auch die Mindesteinschraubtiefe der Schraube in den Untergrund kann, wie vorstehend ausgeführt wurde, sicher erkannt werden.

Bei einer nicht erfindungsgemäßen Ausgestaltung sind in der Aufnahmebohrung Sperrmittel vorgesehen, die einerseits an dem Halteelement und andererseits an dem Schaft der Schraube angreifen, um eine Bewegung des Haltetellers relativ zur Schraube in Richtung auf das dem Schraubenkopf gegenüberliegende Schraubenende zu zu ermöglichen und um eine Bewegung des Haltetellers relativ zur Schraube in der Gegenrichtung, von dem Schraubenende weg, zu sperren.

Bei einer solchen Ausbildung der Sperrmittel ist das sogenannte Nachtreten oder Nachschieben des Halteelements in Richtung auf den Untergrund zu möglich. Das Halteelement wird dann in Richtung auf den Untergrund zu gedrückt und die Sperrmittel geraten außer Eingriff mit dem Gewinde der Schraube und rutschen zusammen mit dem Halteteller nach. Wenn die vorgesehene Position des Halteelements erreicht ist, greifen die Sperrmittel wieder in das Gewinde ein und sperren dadurch eine Bewegung des Halteelements bzw. des Haltetellers vom Untergrund weg. Dadurch kann eine Vorspannung auf die Oberseite des Dämmstoffs aufrechterhalten werden, auch wenn der Dämmstoff schwindet. Geeignete Sperrmittel sind beispielsweise Sperrkugeln in einem Käfig, einfache Ringscheiben oder auch Schraubenfedern mit geeignetem Durchmesser.

Bei einer nicht erfindungsgemäßen Ausgestaltung weisen die Sperrmittel eine Buchse auf, die in der Aufnahmebohrung angeordnet ist und durch die sich der Schaft der Schraube hindurch erstreckt, wobei eine dem Schraubenkopf zugewandte Stirnseite der Buchse wenigstens abschnittsweise mit einer wendelförmigen und nach innen, zum Schaft der Schraube hin geneigten Anlagefläche für wenigstens einen Sperrkörper versehen ist.

Mittels einer solchen Buchse kann erreicht werden, dass der oder die Sperrkörper, wenn sie entlang dem Gewinde der Schraube in Richtung auf den Untergrund zu rutschen, wieder zuverlässig in das Gewinde eingreifen, wenn sie mit der Buchse zusammenwirken.

Bei einer nicht erfindungsgemäßen Ausgestaltung ist ein als Schraubenfeder ausgebildeter Sperrkörper vorgesehen, wobei ein Innendurchmesser der Schraubenfeder größer ist als ein Außendurchmesser des Gewindes der Schraube.

Mittels einer Schraubenfeder kann ein zuverlässiger Eingriff zwischen dem Gewinde und der Schraubenfeder erzielt werden und gleichzeitig ist eine Schraubenfeder als Sperrkörper auch gut geeignet, um über das Gewinde zu rutschen und dadurch ein Nachdrücken oder Nachspannen des Halteelements zu ermöglichen.

In Weiterbildung der Erfindung weist die Aufnahmebohrung im Halteelement eine Stufe oder eine Verengung auf, wobei ein Innendurchmesser der Aufnahmebohrung zwischen dem Halteteller und der Stufe oder Verengung größer ist als ein Durchmesser des Schraubenkopfs und ein Innendurchmesser der Aufnahmebohrung an der Stufe oder Verengung kleiner ist als der Durchmesser des Schraubenkopfs und größer ist als der Außendurchmesser des Schafts.

Das Halteelement kann dadurch relativ zur Schraube bewegt werden, da es über das Gewinde der Schraube rutschen kann. Die Sperrmittel sorgen dann dafür, dass das Halteelement gegen eine Bewegung vom Untergrund weg, also in Richtung auf den Schraubenkopf zu, gesperrt ist.

Das der Erfindung zugrunde liegende Problem wird auch durch ein Verfahren zum Befestigen von Dämmstoff an einem Untergrund, insbesondere auf einem Gebäudedach oder an einer Gebäudewand, mit einem erfindungsgemäßen Befestigungselement gelöst, wobei folgende Schritte vorgesehen sind:
- Einsetzen des Befestigungselements in den Dämmstoff, so dass das freie Ende der Schraube auf dem Untergrund oder am Beginn einer Bohrung im Untergrund angeordnet ist,
- Einschrauben der Schraube in den Untergrund, bis eine Unterseite des Haltetellers auf der Oberseite des Dämmstoffs aufliegt und
- weiteres Einschrauben der Schraube in den Untergrund, bis der Halteteller die Oberseite des Dämmstoffs im Bereich des Haltetellers um einen vordefinierten Weg in Richtung auf den Untergrund zu eingedrückt hat.

Das erfindungsgemäße Verfahren ermöglicht eine besonders einfache Befestigung von Dämmstoff, wobei zum einen problemlos eine Vorspannung des Halteelements gegenüber der Oberseite des Dämmstoffs erzeugt werden kann und zum anderen eine Kontrolle der Mindesteinschraubtiefe der Schraube in den Untergrund möglich ist. Sobald die Schraube mit dem ersten Abschnitt des Gewindes in den Untergrund eingreift, wird die Schraube mit jeder Umdrehung um den Betrag der ersten Steigung des ersten Abschnitts des Gewindes in den Untergrund eingezogen. Das Halteelement greift unmittelbar oder über Sperrmittel am zweiten Abschnitt des Gewindes der Schraube an, wobei die Steigung im zweiten Abschnitt des Gewindes kleiner ist als die Steigung im ersten Abschnitt des Gewindes, der in den Untergrund eingeschraubt wird. Mit jeder Umdrehung der Schraube wird infolgedessen das Halteelement zusammen mit der Schraube um die Differenz der ersten Steigung zur zweiten Steigung in Richtung auf den Untergrund zu bewegt. Zum einen ist dadurch ein problemloses Vorspannen der Oberseite des Dämmstoffs in Richtung auf den Untergrund zu möglich und zum anderen kann an dem Weg, den das Halteelement bzw. der Halteteller in Richtung auf den Untergrund zu zurücklegt, abgelesen werden, um wie viele Umdrehungen die Schraube in den Untergrund eingegriffen hat, mit anderen Worten, wie groß die Einschraubtiefe der Schraube im Untergrund ist und ob die Mindesteinschraubtiefe bereits erreicht ist.

Beispielsweise wird das Halteelement so angeordnet, dass die Unterseite des Haltetellers auf der Oberseite des Dämmstoffs aufliegt, wenn die Schraube mit ihrer Spitze oder ihrem freien Ende auf der Oberseite des Untergrunds aufliegt oder sich am Beginn einer Bohrung im Untergrund befindet. Der Halteteller wird dann beim Einschrauben der Schraube in den Untergrund so festgehalten, dass er sich nicht zusammen mit der Schraube dreht, sich in axialer Richtung aber bewegen kann. Wenn der Halteteller dann die Oberseite des Dämmstoffs um einen vordefinierten Weg eingedrückt hat, so ist dadurch dann sichergestellt, dass auch die Schraube mit der vorgesehenen Mindesteinschraubtiefe in den Untergrund eingreift.

Vorteilhafterweise werden die erste Steigung im ersten Abschnitt des Gewindes und die zweite Steigung im zweiten Abschnitt des Gewindes so dimensioniert bzw. zueinander ins Verhältnis gesetzt, dass die vorgesehene Mindesteinschraubtiefe der Schraube in den Untergrund erreicht ist, wenn der vordefinierte Weg, um den der Halteteller die Oberseite des Dämmstoffs im Bereich des Haltetellers in Richtung auf den Untergrund eingedrückt hat, zwischen 15 mm und 35 mm liegt, insbesondere 25 mm beträgt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen gezeigten und der Beschreibung beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang gezeigt oder beschrieben sind. In den Zeichnungen zeigen:
Fig. 1 eine Schraube für das erfindungsgemäße Befestigungselement,
Fig. 2 eine teilweise geschnittene Ansicht eines Befestigungselements gemäß einer nicht erfindungsgemäßen Ausführungsform während der Befestigung eines Dämmstoffs an einem Untergrund,
Fig. 3 das Befestigungselement der Fig. 2 in einem zweiten Zustand, in dem der Dämmstoff an dem Untergrund befestigt ist,
Fig. 4 ein erfindungsgemäßes Befestigungselement gemäß einer Ausführungsform der Erfindung in einem ersten Zustand beim Befestigen von Dämmstoff an einem Untergrund,
Fig. 5 das Befestigungselement der Fig. 4 in einem zweiten Zustand, in dem der Dämmstoff an dem Untergrund befestigt ist,
Fig. 6 eine vergrößerte Einzelheit des Befestigungselements der Fig. 5,
Fig. 7 eine auseinandergezogene Darstellung des Befestigungselements der Fig. 4 bis 6,
Fig. 8 eine Draufsicht auf eine Schraubenfeder des Befestigungselements der Fig. 4 bis 7,
Fig. 9 eine Seitenansicht der Schraubenfeder des Befestigungselements der Fig. 4 bis 7,
Fig. 10 eine Seitenansicht der Schraube des Befestigungselements der Fig. 4 bis 7,
Fig. 11 eine auseinandergezogene Darstellung eines Befestigungselements gemäß einer nicht erfindungsgemäßen Ausführungsform und
Fig. 12 eine abschnittsweise Schnittansicht des Befestigungselements der Fig. 11 im zusammengebauten Zustand.

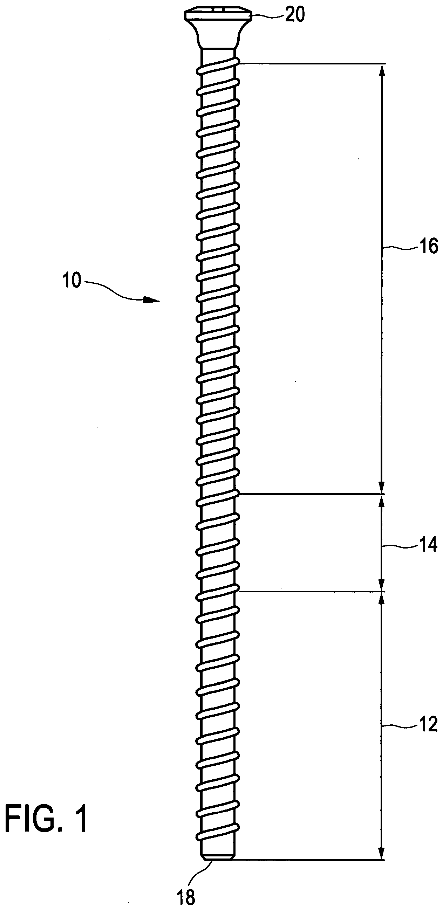

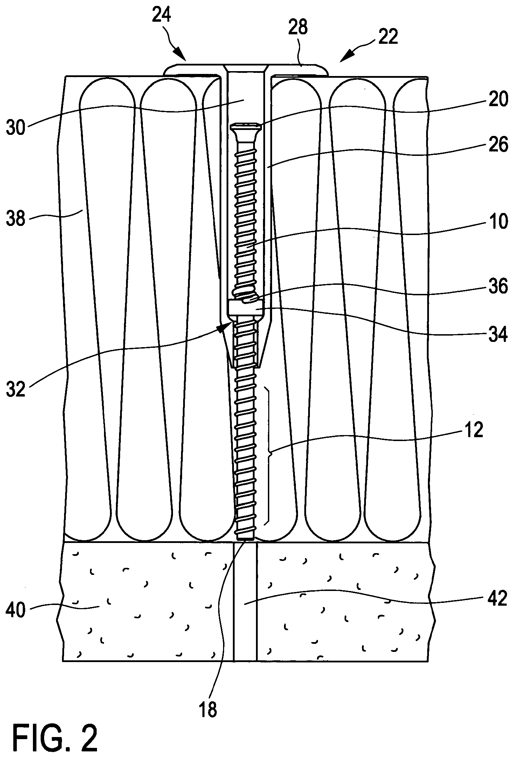

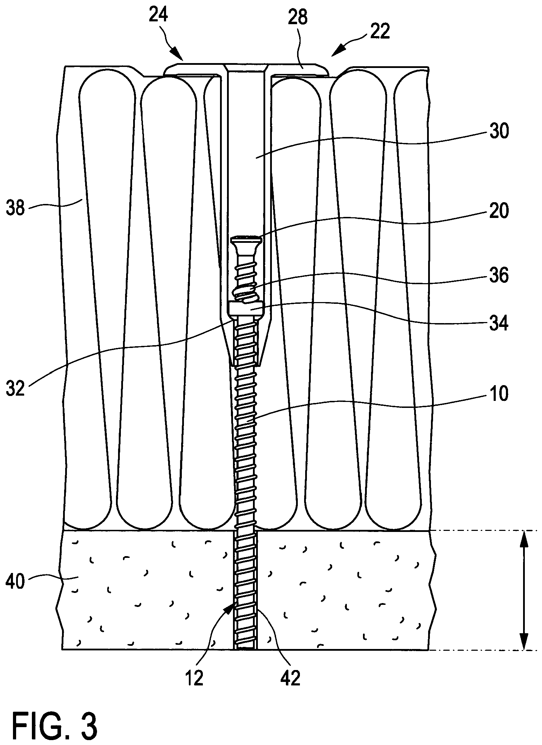

Fig. 1 zeigt eine Schraube 10 für ein erfindungsgemäßes Befestigungselement. Die Schraube 10 kann für Befestigungselemente verschiedener Ausführungsformen der Erfindung eingesetzt werden. Beispielsweise kann die Schraube 10 in Verbindung mit Sperrmitteln eingesetzt werden, die so ausgebildet sind, dass sie entlang dem Gewinde der Schraube rutschen können, um dadurch ein Nachtreten oder Nachschieben des Haltetellers in Richtung auf den Untergrund zu zu ermöglichen. Eine solche Ausführungsform eines Befestigungselements ist anhand der Fig. 2 und 3 erläutert und in diesen Figuren gezeigt.

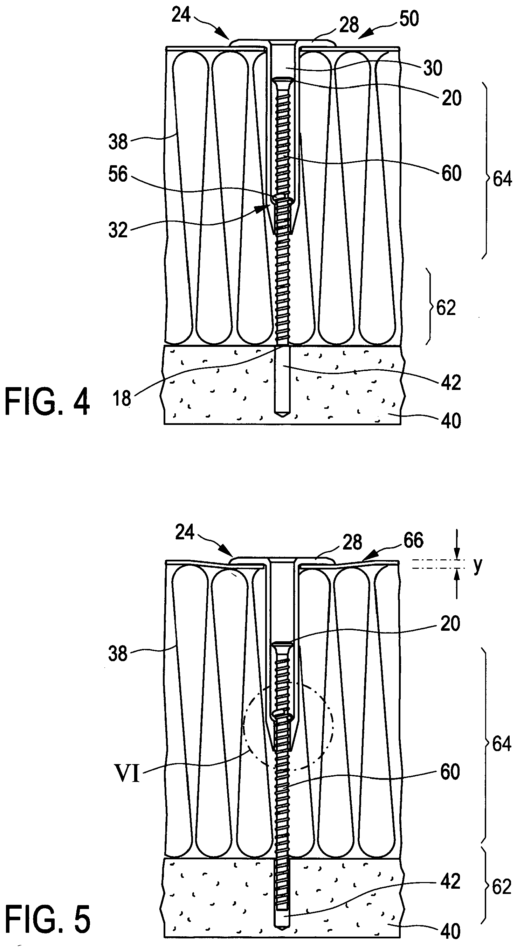

Die Schraube 10 kann aber zusammen mit Sperrmitteln eingesetzt werden, die beständig in das Gewinde der Schraube eingreifen und infolgedessen nicht außer Eingriff mit dem Gewinde kommen können. Solche Sperrmittel können beispielsweise als Schraubenfeder ausgebildet sein und ein entsprechendes Befestigungsmittel ist beispielsweise in den Fig. 4 bis 7 gezeigt.

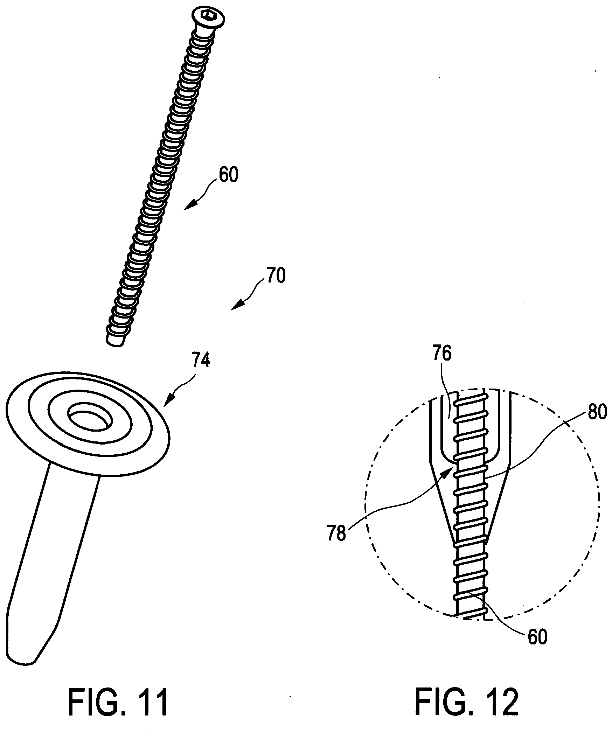

Die Schraube 10 kann aber auch ohne Sperrmittel eingesetzt werden und dann unmittelbar an dem Halteelement angreifen, beispielsweise in Form eines Gewindeeingriffs, wie er in Fig. 12 dargestellt ist.

Im Unterschied zu einer konventionellen Schraube, die ein Gewinde mit über die gesamte Länge des Schafts gleichmäßiger Steigung aufweist, ist das Gewinde der Schraube 10 mit mehreren Abschnitten 12, 14, 16 mit unterschiedlicher Steigung versehen.

In einem ersten Abschnitt 12 ist das Gewinde der Schraube als Standard-Betongewinde mit einer ersten Steigung ausgebildet. Im Rahmen der Erfindung kann das Gewinde auch als Holzgewinde oder sonstiges Gewinde ausgebildet sein, abhängig von der Art des Untergrunds, in den die Schraube 10 eingeschraubt werden soll. Der erste Abschnitt 12 erstreckt sich von dem in Fig. 14 unten angeordneten freien Ende 18 der Schraube 10, das dem Schraubenkopf 20 gegenüberliegt und das im Rahmen der Erfindung auch als Spitze ausgebildet sein kann, bis zu einem Übergangsabschnitt 14. An dem Übergangsabschnitt 14 schließt sich ein zweiter Abschnitt 16 des Gewindes an, in dem das Gewinde eine gegenüber dem ersten Abschnitt 12 geringere Steigung aufweist. Der Übergangsabschnitt 14 ist dafür vorgesehen, die Gewindesteigungen zwischen dem ersten Abschnitt 12 und dem zweiten Abschnitt 16 ineinander übergehen zu lassen und ist im Rahmen der Erfindung nicht zwingend erforderlich. Das Gewinde der Schraube 10 weist einen einzigen, über die gesamte Länge des Gewindes durchgehenden und sich um den Schaft herumwindenden Gewindevorsprung auf, der aber eben, wie bereits erläutert wurde, unterschiedliche Steigungen des Gewindes definiert. Das Gewinde der Schraube 10 ist bei der dargestellten Ausführungsform eingängig ausgeführt, kann beispielsweise aber auch mehrgängig ausgeführt sein. Die Schraube 10 weist einen Schraubenkopf 18 auf, der gegenüber dem Schaft einen größeren Außendurchmesser aufweist und der mit einer Antriebsausbildung versehen ist.

Die Steigung des Gewindes im ersten Abschnitt 12 und die Steigung des Gewindes im zweiten Abschnitt 16 sind in vordefinierter Weise aufeinander abgestimmt. Die erste Steigung im ersten Abschnitt 12 ist größer als die zweite Steigung im zweiten Abschnitt 16. Wird nun der erste Abschnitt 12 in einen Untergrund eingeschraubt und greift gleichzeitig das Gewinde im zweiten Abschnitt 16 an einem Halteelement an, so dass sich die Schraube relativ zu dem Halteelement dreht, so wird mit jeder Umdrehung der Schraube 10 das Halteelement ein Stück weit in Richtung auf das in Fig. 1 untere, freie Ende der Schraube 10 zu bewegt. Der Weg, den das Halteelement relativ zur Schraube 10 bei jeder Umdrehung der Schraube 10 zurücklegt, ist dabei durch das Verhältnis der Steigungen im ersten Abschnitt 12 und im zweiten Abschnitt 16 bestimmt. Ist beispielsweise die Steigung im ersten Abschnitt 12 um 1 mm größer als im zweiten Abschnitt 16, so wird das Halteelement dann mit jeder Umdrehung der Schraube 10 um 1 mm in Richtung auf das in Fig. 1 unteren Ende der Schraube zubewegt. Diese Relativbewegung zwischen Halteelement und Schraube 10 kann zum einen dazu benutzt werden, eine Oberseite des Dämmstoffs mittels des Halteelements in Richtung auf den Untergrund zu vorzuspannen. Zum anderen kann diese Relativbewegung dazu verwendet werden, die Mindesteinschraubtiefe der Schraube 10 im Untergrund zu kontrollieren. Denn das Verhältnis der Steigungen im ersten Abschnitt 12 und im zweiten Abschnitt 16 ist ja bekannt. Wenn also die Schraube 10 mit dem ersten Abschnitt 12 beispielsweise um 10 Umdrehungen in den Untergrund eingeschraubt ist, dann hat sich auch das Halteelement um den zehnfachen Betrag der Differenz zwischen den Steigungen im ersten Abschnitt 12 und im zweiten Abschnitt 16 in Richtung auf das in Fig. 1 untere Ende der Schraube zu bewegt und dadurch beispielsweise die Oberseite des Dämmstoffs eingedrückt. Ist die Oberseite des Dämmstoffs dann beispielsweise um 10 mm eingedrückt oder um einen anderen vordefinierten Weg, kann daraus geschlossen werden, dass der erste Abschnitt der Schraube 12 mit zehn Umdrehungen oder zehn Gewindeumläufen im Untergrund sitzt und dadurch die Mindesteinschraubtiefe erreicht ist. Die Mindesteinschraubtiefe der Schraube 10 in den Untergrund hängt selbstverständlich von der Art des Untergrunds und der Art und Dicke des zu befestigenden Dämmstoffs ab. Mit der Erfindung wird aber erstmals eine einfache Kontrollmöglichkeit geschaffen, die Mindesteinschraubtiefe der Schraube 10 zu überprüfen, auch wenn der Untergrund durch den zu befestigenden Dämmstoff vollständig abgedeckt ist.

Fig. 2 zeigt eine teilweise geschnittene Darstellung eines Befestigungselements 22 gemäß einer nicht erfindungsgemäßen Ausführungsform im teilweise montierten Zustand. In der Darstellung der Fig. 2 ist das freie Ende der Schraube unmittelbar vor dem Beginn eines vorher gebohrten Lochs 42 in einem Untergrund angeordnet. Wird die Schraube 10 ausgehend von der in Fig. 2 dargestellten Stellung weitergedreht, greift das Betongewinde im ersten Abschnitt 12 in die Bohrung 42 ein und zieht die Schraube 10 dadurch in die Bohrung 42 hinein. Bei konventionellen Befestigungselementen ist es problematisch, festzustellen, ob das Gewinde im Abschnitt 12 bereits ausreichend tief in den Untergrund eingreift. Mit dem Befestigungselement 22 gemäß den Fig. 2 bis 3 kann dieses Problem in überraschend einfacher Weise gelöst werden.

Während des Einschraubens der Schraube 10 greift die Schraubenfeder 36 zunächst in das Gewinde des ersten Abschnitts 12, dann in das Gewinde des Übergangsabschnitts 14 und dann in das Gewinde des zweiten Abschnitts 16 ein. Die Länge des ersten Abschnitts 12, des Übergangsabschnitts 14 und des zweiten Abschnitts 16 ist nun so bemessen, dass dann, sobald das Gewinde des ersten Abschnitts 12 ausreichend tief in die Bohrung 42 im Untergrund 40 eingreift, die Schraubenfeder 36 in das Gewinde des zweiten Abschnitts 16 eingreift. Solange sich die Schraube 10 dreht, wird dadurch der Vorschub der Schraube 10 in der Bohrung 42 größer sein als der Vorschub der Schraube 10 relativ zur Schraubenfeder 36 und zur Buchse 34. Dies ist dadurch verursacht, dass die Steigung des Gewindes im ersten Abschnitt 12 größer ist als die Steigung des Gewindes im zweiten Abschnitt 16. Mit anderen Worten wird also dann, sobald die Schraubenfeder 36 in das Gewinde des zweiten Abschnitts 16 eingreift, der Halteteller 28 zusammen mit der Buchse 34 und dem Halteelement 24 in Richtung auf den Untergrund 40 und den Dämmstoff 38 zu bewegt. Der Halteteller 24 wird dadurch, in die Oberfläche des Dämmstoffs 38 eingedrückt, wie dies in Fig. 3 dargestellt ist. Bei entsprechender Bemessung der Länge des ersten Abschnitts 12, des Übergangsabschnitts 14 und des zweiten Abschnitts 16 sowie der Steigungen des Gewindes im ersten Abschnitt 12 und im zweiten Abschnitt 16 kann dadurch in einfacher Weise festgestellt werden, wann die Mindesteinschraubtiefe der Schraube 10 im Untergrund 40 erreicht ist. Dies ist nämlich, siehe Fig. 3, dann der Fall, wenn der Halteteller 28 ein Stück weit und speziell um einen vordefinierten Weg in die Oberfläche des Dämmstoffs 38 eingedrückt ist. Die Mindesteinschraubtiefe, die Länge des ersten Abschnitts 12, die Länge des Übergangsabschnitts 14, die Länge des zweiten Abschnitts 16, die Dicke des Dämmstoffs 38 und die Länge des Halteelements 24 sind dabei zweckmäßigerweise so aufeinander abgestimmt, dass die Schraubenfeder 36 und die Buchse 34 im Übergangsabschnitt 14, teilweise im Übergangsabschnitt 14 und teilweise im zweiten Abschnitt 16 oder bereits vollständig im zweiten Abschnitt 16, angeordnet sind, sobald die Mindesteinschraubtiefe der Schraube 10 in der Bohrung 42 erreicht ist.

Mit anderen Worten ist sichergestellt, dass die Mindesteinschraubtiefe erreicht ist, sobald der Halteteller 28 die Oberseite des Dämmstoffs 38 um einen vordefinierten Weg eingedrückt hat. Dies ist bei konventionellen Befestigungselementen immer ungewiss. Die Dachbahn auf der Dämmung erhält durch das erfindungsgemäße Befestigungselement den nötigen Anpressdruck, da durch die unterschiedlichen Gewindesteigungen im ersten Abschnitt 12 und im zweiten Abschnitt 16, und speziell die gegenüber dem ersten Abschnitt 12 geringere Gewindesteigung im zweiten Abschnitt 16, beim Eindrehen der Schraube 10 der Halteteller 28 sich mit anderer Geschwindigkeit in Richtung auf den Untergrund 40 zu bewegt als die Schraube 10. Die Schraube 10 kann im Rahmen der Erfindung mit allen beschriebenen Befestigungselementen kombiniert werden.

Das Befestigungselement 22 weist ein Halteelement 24 auf, das einen zylindrischen Halteabschnitt 26 und einen zylindrischen, radial über den Halteabschnitt überstehenden Halteteller 28 aufweist. Das Halteelement 24 ist von einer Aufnahmebohrung 30 durchsetzt, die in einem von dem Halteteller 28 abgewandten oder beabstandeten Bereich einen verringerten Durchmesser aufweist. Am Übergang zu dem verringerten Durchmesser ist infolgedessen in der Aufnahmebohrung eine Stufe 32 ausgebildet. In der Aufnahmebohrung 30 ist die Schraube 10 abschnittsweise angeordnet, die in dem, dem Halteteller 28 abgewandten Bereich mit ihrem freien Ende 18 über das Halteelement 24 hinausragt. Das freie Ende 18 ist bei der Schraube 10 als stumpfes Ende ausgeführt, kann im Rahmen der Erfindung aber beispielsweise auch als selbstbohrende Schraubenspitze mit Schneiden ausgeführt sein.

Der Durchmesser der Aufnahmebohrung 30 verengt sich an der Stufe 32 auf einen Wert, der kleiner ist als der Außendurchmesser des Schraubenkopfs 20 der Schraube 10, aber größer ist als der Außendurchmesser des Schafts der Schraube 10 und somit auch größer als der Außendurchmesser des Gewindes auf dem Schaft. Das Halteelement 24 kann ausgehend von der in Fig. 2 dargestellten Stellung also entlang der Schraube 10 nach unten verschoben werden. Eine Bewegung des Halteelements in Fig. 2 nach oben wird durch Sperrmittel verhindert, die bei der dargestellten Ausführungsform eine Buchse 34 und eine Schraubenfeder 36 aufweisen. Die Buchse 34 liegt mit ihrer Unterseite auf der Stufe 32 der Aufnahmebohrung auf und die Schraubenfeder 36 liegt auf der Oberseite der Buchse 34 auf. Um das Befestigungselement 22 vorzumontieren, wird zunächst die Schraubenfeder 36 auf den Schaft der Schraube 10 aufgeschoben. Ein Innendurchmesser der Schraubenfeder 36 ist größer als ein Außendurchmesser des Gewindes der Schraube 10, so dass die Schraubenfeder 36 in sehr einfacher Weise auf den Schaft der Schraube 10 aufgeschoben werden kann. Ein Innendurchmesser der Schraubenfeder 36 ist kleiner als ein Außendurchmesser des Schraubenkopfs 20 der Schraube 10.

Nach der Schraubenfeder 36 wird die Buchse 34 auf den Schaft der Schraube 10 aufgeschoben. Ein Innendurchmesser der Buchse 34 ist größer als ein Außendurchmesser des Gewindes der Schraube 10 und der Innendurchmesser der Buchse 34 ist kleiner als ein Außendurchmesser des Schraubenkopfs 20 der Schraube 10. Zusammen mit der Buchse 34 und der Schraubenfeder 36 wird die Schraube 10 dann in die Aufnahmebohrung 30 des Halteelements 24 eingeschoben.

Die Buchse 34 ist grundsätzlich zylindrisch ausgeführt, weist aber auf ihrer, in Fig. 2 oben liegenden und im montierten Zustand dem Schraubenkopf 20 der Schraube 10 zugewandten Stirnseite eine wendelförmige Anlagefläche auf. Die wendelförmige Anlagefläche ist nach innen, zur Mittellängsachse der Buchse 34 hin geneigt. Die wendelförmige Anlagefläche erstreckt sich über einen Winkel von 270° über die Stirnseite der Buchse 34. Eine Steigung der wendelförmigen Anlagefläche entspricht der Steigung des Gewindes der Schraube 10 im zweiten Abschnitt 16. Die wendelförmige Anlagefläche ist dafür vorgesehen, den Sperrkörper, also die Schraubenfeder 36, bei einer Bewegung der Buchse 34 relativ zur Schraube 10 in Fig. 2 nach oben, in Richtung auf den Schaft der Schraube 10 rutschen zu lassen, bis ein Abschnitt der Schraubenfeder 36 am Schaft der Schraube 10 in einem Bereich zwischen den Gewindeflanken des Gewindes der Schraube 10 anliegt. Mit anderen Worten soll die wendelförmige Anlagefläche der Buchse 34 also bewirken, dass ein Abschnitt der Schraubenfeder 36 nach innen rutscht und sich im Gewinde der Schraube 10 verklemmt. In dieser Position kann die Schraubenfeder 36 als Sperrkörper dann eine Sperrwirkung entfalten. Denn es ist dann nicht mehr möglich, die Buchse 34 weiter entlang dem Schaft der Schraube 10 in Richtung auf den Schraubenkopf 20 zu zubewegen, da die Schraubenfeder diese Relativbewegung sperrt.

Umgekehrt ist es aber möglich, den Halteteller 28 des Halteelements 24 in Richtung auf das Ende 18 der Schraube 10 zu zubewegen. Die Buchse 34 und die Schraubenfeder 36 folgen, der Schwerkraft gehorchend, dabei der Bewegung des Halteelements 24 und rutschen auf dem Gewinde der Schraube 10 in Fig. 2 nach unten, bis die Buchse 34 wieder auf der Stufe 32 der Aufnahmebohrung 30 aufliegt.

Fig. 2 zeigt das Befestigungselement 22 in einem Zustand, in dem das Befestigungselement 22 bereits in eine vorher angefertigte Bohrung in einem Dämmstoff 38 eingeschoben wurde, bis eine Unterseite des Haltetellers 28 auf der Oberseite des Dämmstoffs aufliegt. Die Schraube 10 ist so angeordnet, dass das Ende 18 auf Höhe einer Oberseite eines Untergrunds 40 angeordnet ist, in den die Schraube 10 eingeschraubt werden soll. Im Untergrund 40 ist eine Bohrung 42 vorhanden, an deren Beginn das Ende 18 der Schraube 10 liegt.

Ausgehend vom Zustand der Fig. 2 kann die Schraube 10 dann in die Bohrung 42 eingeschraubt werden.

Fig. 3 zeigt eine teilweise geschnittene Ansicht des Befestigungselements 22 im montierten Zustand. Die Schraube 10 ist in die Bohrung 42 im Untergrund 40 eingeschraubt worden, so dass annähernd die vollständige Länge des ersten Abschnitts 12 des Gewindes in der Bohrung 42 angeordnet ist. Die Schraube 10 ist beispielsweise als Betonschraube ausgebildet und kann ohne Zwischenfügen eines Dübels unmittelbar in den Untergrund 40 eingeschraubt werden. Der Untergrund 40 kann eine Dachfläche bilden, auf die der Dämmstoff 38 aufgelegt ist. Der Halteteller 28 des Halteelements 24 liegt auf der Oberseite des Dämmstoffs 38 auf. Die Schraubenfeder 36 liegt abschnittsweise auf der wendelförmigen Anlagefläche auf der Stirnseite der Buchse 34 auf, die dem Schraubenkopf 20 der Schraube 10 zugewandt ist. Es ist Fig. 3 zu entnehmen, dass die Schraubenfeder 36 dadurch in dem Bereich, in dem sie auf der Anlagefläche der Buchse 34 aufliegt, gleichzeitig die in Fig. 3 unten angeordnete Fläche einer Gewindeflanke des Gewindes der Schraube 10 kontaktiert. Im Zustand der Fig. 3 ist somit eine Bewegung der Buchse 34 nach oben, in Richtung auf den Schraubenkopf 20 der Schraube 10 zu, durch die Schraubenfeder 36 gesperrt. Infolgedessen kann auch das Halteelement 22 ausgehend vom Zustand der Fig. 3 nicht nach oben, also von der Oberseite des Dämmstoffs 38 weg, bewegt werden.

Der Halteteller 28 drückt im Zustand der Fig. 3 die Oberseite des Dämmstoffs 38 ein Stück weit ein und übt dadurch eine Vorspannung auf den Dämmstoff 38 aus. Diese Vorspannung wird durch einfaches Eindrehen der Schraube 10 bewirkt. Wenn die Schraube 10 mit dem ersten Abschnitt 12 des Gewindes in die Bohrung 42 im Untergrund 40 eingreift, so wird die Schraube mit jeder Umdrehung um den Betrag der Steigung im ersten Abschnitt 12 in den Untergrund 40 eingeschraubt. Gleichzeitig sorgt die Schraubenfeder 36 für einen Eingriff in das Gewinde im zweiten Abschnitt 16. Da die Steigung des Gewindes im zweiten Abschnitt 16 kleiner ist als im ersten Abschnitt 12, wird infolgedessen die Schraubenfeder 36 und damit die Buchse 34 und das Halteelement 24 mit jeder Umdrehung der Schraube ein Stück weit in Richtung auf den Untergrund 40 zu bewegt, wenn sich die Schraube 10 relativ zur Schraubenfeder 36 dreht. Wenn die Schraube 10 dann mit der vorgesehenen Mindesteinschraubtiefe in der Bohrung 42 im Untergrund 40 angeordnet ist, hat dann auch der Halteteller 28 die Oberseite des Dämmstoffs 38 um einen vordefinierten Weg eingedrückt. Dieser vordefinierte Weg, um den der Halteteller 28 die Oberseite des Dämmstoffs 38 eindrückt, hängt vom Verhältnis der Steigungen im ersten Abschnitt 12 und im zweiten Abschnitt 16 des Gewindes der Schraube 10 ab. Anhand des Wegs, um den der Halteteller 28 die Oberseite des Dämmstoffs 38 eingedrückt hat, kann dann in einfacher Weise festgestellt werden, ob die Schraube 10 mit der geforderten Mindesteinschraubtiefe, also mit der erforderlichen Zahl an Umläufen des Gewindes, im Untergrund 40 angeordnet ist.

Bei dem Befestigungselement 22 der Fig. 2 und 3 kann das Halteelement 24 auch zusätzlich noch in die Oberseite des Dämmstoffs 38 eingedrückt werden, beispielsweise mittels eines Fußtritts eingedrückt werden. Der Dämmstoff 38 kann dadurch weiter komprimiert werden oder es können auch nach einiger Zeit Setzungserscheinungen am Dämmstoff 38 kompensiert werden. Wenn der Halteteller 28 ausgehend vom Zustand der Fig. 3 nach unten, in Richtung auf den Untergrund 40 gedrückt wird, bewegt sich die Stufe 32 der Aufnahmebohrung 30 des Halteelements 24 ebenfalls nach unten in Richtung auf den Untergrund 40. Die Buchse 34 und die Schraubenfeder 36 können dann nachrutschen, bis die Schraubenfeder 36 wieder auf der Anlagefläche der Buchse 34 anliegt, in das Gewinde der Schraube 10 eingreift und dadurch eine Bewegung des Halteelements 24 zurück, in Fig. 3 also nach oben, wieder sperrt.

Fig. 4 zeigt eine Ausführungsform eines erfindungsgemäßen Befestigungselements 50 in teilweiser Schnittansicht und in einem Zustand, in dem das Befestigungselement 50 bereits in eine vorher angefertigte Bohrung im Dämmstoff 38 eingesetzt worden ist, die Schraube 10 aber noch nicht in die Bohrung 42 im Untergrund 40 eingreift. Das Halteelement 24 wurde bereits erläutert. Die Aufnahmebohrung 30 des Halteelements weist in einem ersten, vom Halteteller 28 ausgehenden Abschnitt einen Durchmesser auf, der größer ist als der Durchmesser des Schraubenkopfs 20 der Schraube 10. An der Stufe 32 verengt sich dann der Durchmesser der Aufnahmebohrung, so dass der Durchmesser der Aufnahmebohrung dann kleiner ist als der Durchmesser des Schraubenkopfs 20, aber noch größer ist als der Außendurchmesser des Gewindes der Schraube 10. Die Schraube 10 kann somit in die Aufnahmebohrung 30 eingesteckt werden bis zu dem in Fig. 4 dargestellten Zustand.

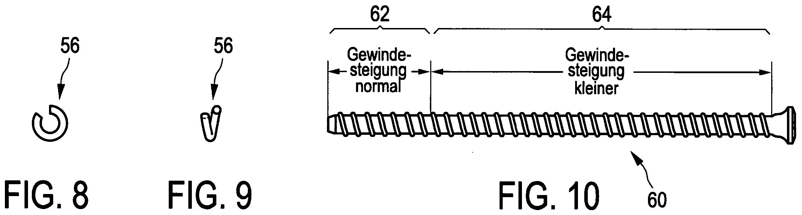

Das Befestigungselement 50 ist mit einem Sperrkörper in Form einer Schraubenfeder 56 versehen. Die Schraubenfeder 56, die detailliert in Fig. 8 und Fig. 9 dargestellt ist, ist aber so bemessen, dass sie ständig in das Gewinde der Schraube 10 eingreift. Der Innendurchmesser der Schraubenfeder 56 ist geringfügig größer als der Kerndurchmesser des Gewindes der Schraube 10, ist aber auch kleiner als der Außendurchmesser des Gewindes der Schraube 10. Mit anderen Worten muss die Schraubenfeder 36 auf das Gewinde der Schraube 10 aufgeschraubt werden, um die in Fig. 4 dargestellte Stellung zu erreichen.

Die Schraube 60 weist, siehe auch Fig. 10, einen ersten Abschnitt 62 auf, in dem die Steigung des Gewindes größer ist als in einem zweiten Abschnitt 64. Im Unterschied zur Schraube 10 der Fig. 1 ist bei der Schraube 60 kein Übergangsbereich vorgesehen. Die Steigung der Schraubenfeder 56 ist so bemessen, dass sie zwischen den Steigungen im ersten Abschnitt 62 und im zweiten Abschnitt 64 liegt. Gleichzeitig ist eine Dicke des Drahtes der Schraubenfeder 56 so bemessen, dass diese mit etwas Spiel in dem Gewinde der Schraube 10 aufgenommen ist. Mit anderen Worten ist die Schraubenfeder 56 so bemessen, dass sie problemlos über den ersten Abschnitt 62 bis in den zweiten Abschnitt 64 des Gewindes geschraubt werden kann.

Im Zustand der Fig. 4 liegt eine Unterseite des Haltetellers 28 auf der Oberseite des Dämmstoffs 38 auf und das in Fig. 4 untere Ende 18 der Schraube 60 ist auf Höhe der Oberseite des Untergrunds 40 und damit unmittelbar am Beginn der Bohrung 42 im Untergrund 40 angeordnet. Eine Bewegung des Halteelements 24 ausgehend vom Zustand der Fig. 4 nach oben, also in Richtung vom Untergrund 40 weg, wird durch die Schraubenfeder 56 verhindert, die in das Gewinde der Schraube 60 eingreift und an der auch die Stufe 32 des Halteelements 24 anliegt. In Richtung auf den Untergrund 40 zu kann das Halteelement 24 ausgehend vom Zustand der Fig. 4 verschoben werden.

Ausgehend vom Zustand der Fig. 4 wird die Schraube 60 dann in die Bohrung 42 im Untergrund 40 eingeschraubt. Da die Steigung des Gewindes im ersten Abschnitt 62 größer ist als im zweiten Abschnitt 64, in dem die Schraubenfeder 56 am Gewinde der Schraube 60 angreift, wird das Halteelement 24 mit jeder Umdrehung der Schraube 60 ein Stück weit in Richtung auf den Untergrund 40 zu bewegt. Dabei wird davon ausgegangen, dass sich weder die Schraubenfeder 56 noch das Halteelement 24 mit der Schraube 60 zusammen drehen. Infolgedessen bewegt sich die Schraubenfeder 56 entlang dem Gewinde im zweiten Abschnitt 64 in Richtung auf den Schraubenkopf 20 zu. Da das Halteelement 24 und somit der Halteteller 28 mit jeder Umdrehung der Schraube 60 ein Stück weit in Richtung auf den Untergrund 40 zu bewegt werden, drückt der Halteteller 28 im Zustand der Fig. 5, in dem die Schraube 60 mit etwa sechs Gewindegängen des ersten Abschnitts 62 in die Bohrung 42 im Untergrund 40 eingreift, die Oberseite des Dämmstoffs 38 um einen vordefinierten Weg y ein. Dieser vordefinierte Weg y entspricht bei der dargestellten Ausführungsform etwa dem sechsfachen Wert der Differenz zwischen den Steigungen im ersten Abschnitt 62 und im zweiten Abschnitt 64. Anhand des Wegs y, um den der Halteteller 28 ausgehend vom Zustand der Fig. 4 die Oberseite 66 des Dämmstoffs 38 eingedrückt hat, kann also bei Kenntnis des Verhältnisses der Steigungen im ersten Abschnitt 62 und im zweiten Abschnitt 64 abgelesen werden, wie viele Umdrehungen oder Gewindeumläufe der Schraube 60 in den Untergrund 40 eingreifen. Je nach der geforderten Mindesteinschraubtiefe in einen speziellen Untergrund kann dann in sehr einfacher Weise der Wert für den Weg y angegeben werden, bei dem die Mindesteinschraubtiefe der Schraube 60 erreicht ist.

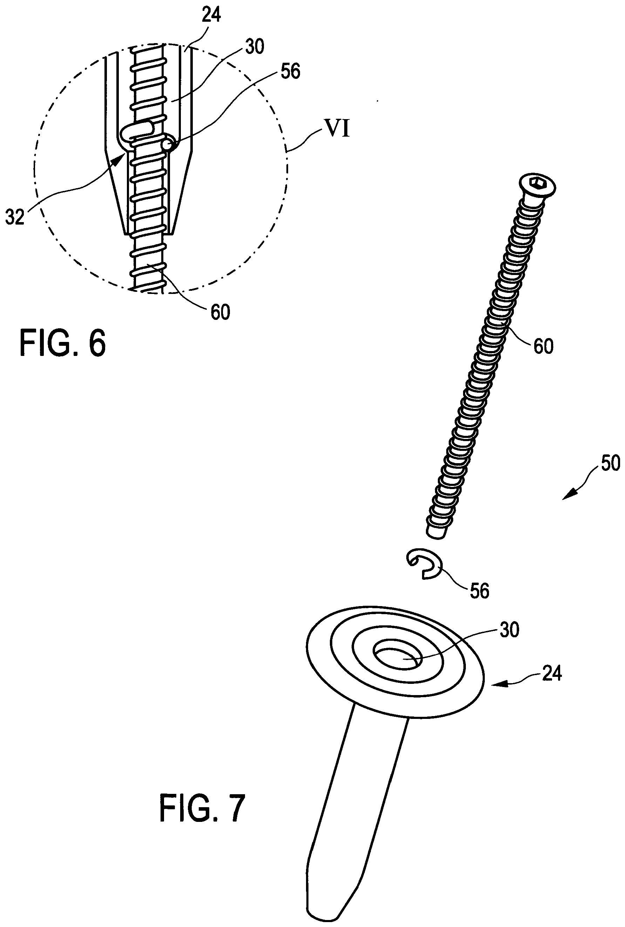

Fig. 6 zeigt die vergrößerte Einzelheit VI aus Fig. 5. Zu erkennen ist die Stufe 32 in der Aufnahmebohrung 30 im Halteelement 24, auf der die Schraubenfeder 56 abschnittsweise aufliegt. Zu erkennen ist auch, dass die Schraubenfeder 56 in das Gewinde der Schraube 60 eingreift, da der Innendurchmesser der Schraubenfeder 56 kleiner ist als der Außendurchmesser des Gewindes der Schraube 60. Weiter ist zu erkennen, dass die Schraubenfeder 56 als offener Ring ausgebildet ist und infolgedessen um weniger als eine volle Umdrehung umläuft.

Fig. 7 zeigt das Befestigungselement 50 der Fig. 4 bis 6 in auseinandergezogener Darstellung und somit vor einer Teilmontage. Um den Zustand der Fig. 4 zu erreichen, muss zunächst die Schraubenfeder 56 auf die Schraube 60 aufgeschraubt werden und dann muss die Schraube 60 in die Aufnahmebohrung 30 des Halteelements 24 eingesteckt werden, bis die Schraubenfeder 56, siehe Fig. 6, auf der Stufe 32 der Aufnahmebohrung 30 aufliegt.

Fig. 8 zeigt eine Draufsicht auf die Schraubenfeder 56. In dieser Ansicht ist gut zu erkennen, dass die Schraubenfeder 56 als offener Ring ausgebildet ist. Die Schraubenfeder erstreckt sich über einen Winkel von etwa 310°.

Fig. 9 zeigt eine Seitenansicht der Schraubenfeder 56. Die Schraubenfeder 56 ist aus einem kreiszylindrischen Draht gewickelt, kann im Rahmen der Erfindung aber auch aus einem Draht mit anderem Querschnitt gewickelt werden. Die in Fig. 9 erkennbare Steigung der Schraubenfeder 56 liegt zwischen der Steigung des Gewindes der Schraube 60 im ersten Abschnitt 62 und der Steigung im zweiten Abschnitt 64.

Fig. 10 zeigt eine Seitenansicht der Schraube 60 des Befestigungselements 50. Wie bereits erläutert wurde, weist die Schraube einen ersten Abschnitt 62 auf, in dem das Gewinde eine erste Steigung hat. Diese erste Steigung kann beispielsweise als normale Gewindesteigung eines Standardbetongewindes ausgeführt sein.

In einem zweiten Abschnitt 64 weist das Gewinde der Schraube 60 dann eine kleinere Gewindesteigung als im ersten Abschnitt 62 auf. Der Betrag, um den die Steigung im zweiten Abschnitt 64 kleiner ist als im ersten Abschnitt 62, wird so bemessen, dass bei der vorgesehenen Mindesteinschraubtiefe in einen bestimmten Untergrund eine gewünschte Eindrücktiefe des Haltetellers in die Oberseite des Dämmstoffs erreicht wird, vgl. die Fig. 4 und 5.

Fig. 11 zeigt ein nicht erfindungsgemäßes Befestigungselement 70 gemäß einer weiteren Ausführungsform. Das Befestigungselement 70 weist lediglich die Schraube 60 und ein Halteelement 74 auf, das gegenüber dem Halteelement 24 der Fig. 4 und 5 geringfügig anders ausgebildet ist. Ein zusätzlicher Sperrkörper wird bei dem Befestigungselement 70 nicht benötigt.

Wie Fig. 12 zu entnehmen ist, ist das Halteelement 74 so ausgebildet, dass die Aufnahmebohrung 76 einen ersten, vom Halteteller ausgehenden Abschnitt aufweist, in dem der Durchmesser der Aufnahmebohrung 76 größer ist als der Außendurchmesser des Gewindes der Schraube 60. Anschließend an eine Stufe 78 ist der Durchmesser der Aufnahmebohrung dann so weit verengt, dass er kleiner ist als der Außendurchmesser des Gewindes der Schraube 60. Mit anderen Worten wird zwischen dem Halteelement 74 und der Schraube 60 somit ein Gewindeeingriff ausgebildet und die Schraube 60 muss in die Verengung 80 der Aufnahmebohrung 76 eingeschraubt werden.

Bei der Befestigung von Dämmstoff mit dem Befestigungselement 70 wird die Schraube so weit in das Halteelement 74 eingeschraubt, bis ein der Fig. 4 vergleichbarer Zustand erreicht ist. Die Schraube 60 wird dann, wie bereits erläutert wurde, in den Untergrund 40 eingeschraubt und mit jeder Umdrehung, mit der die Schraube 60 in den Untergrund 40 eingeschraubt wird, bewegt sich das Halteelement 74 in Richtung auf den Untergrund zu, da ja das Halteelement 74 im Bereich der Verengung 80 in Gewindeeingriff mit dem zweiten Abschnitt 64 des Gewindes der Schraube 60 steht. Auch das Halteelement 74 wird somit mit jeder Umdrehung der Schraube 60 um einen vorbestimmten Weg in Richtung auf den Untergrund zubewegt. Auch mittels des Halteelements 74 und der Schraube 60 kann dadurch festgestellt werden, wie bereits anhand der Fig. 5 erläutert wurde, wann die Schraube 60 ihre Mindesteinschraubtiefe erreicht hat, indem der Weg, um den der Halteteller des Halteelements 74 die Oberseite des Dämmstoffs eingedrückt hat, kontrolliert wird.

## Patentansprüche

1. Befestigungselement zum Befestigen von Dämmstoff an einem Untergrund, insbesondere auf einem Gebäudedach oder an einer Gebäudewand, mit einem Halteelement (24), das einen Halteteller (28) und einen sich vom Halteteller (28) aus erstreckenden rohrartigen Halteabschnitt aufweist, wobei das Halteelement (24) eine sich durch den Halteteller (28) und den Halteabschnitt erstreckende Aufnahmebohrung (30) aufweist, und mit einer abschnittsweise in der Aufnahmebohrung (30) angeordneten Schraube (10;60), wobei die Schraube (10;60) einen Schraubenkopf (20) mit einer Antriebsausbildung und einen Schaft aufweist, der wenigstens abschnittsweise mit einem Gewinde versehen ist, wobei in der Aufnahmebohrung (30) Sperrmittel vorgesehen sind, die einerseits an dem Halteelement (24) und andererseits an dem Gewinde der Schraube (10;60) angreifen, um eine Bewegung des Halteelements (24) relativ zur Schraube (10;60) in Richtung auf den Schraubenkopf (20) oder in Richtung vom Untergrund (40) weg zu sperren, **dadurch gekennzeichnet, dass** das Gewinde mehrere Abschnitte (12,14,16;62;64) mit unterschiedlichen Steigungen aufweist, wobei eine erste Steigung in einem vom freien Ende (18) der Schraube (10;60), das dem Schraubenkopf (20) gegenüberliegt, ausgehenden ersten Abschnitt (12;62) größer ist als in einem zwischen dem schraubenkopfseitigen Ende des ersten Abschnitts (12;62) und dem Schraubenkopf (20) angeordneten zweiten Abschnitt (16;64), und dass die Sperrmittel eine Schraubenfeder (56) aufweisen, wobei ein Innendurchmesser der Schraubenfeder (56) größer ist als ein Kerndurchmesser des Gewindes der Schraube (10;60) und kleiner ist als ein Außendurchmesser des Gewindes der Schraube (10;60).

2. Befestigungselement nach Anspruch 1, **dadurch gekennzeichnet, dass** zwischen dem ersten Abschnitt (12) und dem zweiten Abschnitt (16) ein Übergangsabschnitt (14) angeordnet ist.

3. Befestigungselement nach Anspruch 1 oder 2, **dadurch gekennzeichnet, dass** der zweite Abschnitt (16;64) sich bis zum Schraubenkopf (20) erstreckt.

4. Befestigungselement nach einem der vorstehenden Ansprüche, **dadurch gekennzeichnet, dass** die Schraubenfeder (56) weniger als einen Umlauf aufweist und als offener Ring ausgebildet ist.

5. Befestigungselement nach Anspruch 4, **dadurch gekennzeichnet, dass** die Schraubenfeder (56)um mehr als 180 Grad und weniger als 360 Grad, insbesondere um einen Winkel zwischen 270 Grad und 350 Grad, insbesondere um einen Winkel von 310 Grad, umläuft.

6. Befestigungselement nach einem der vorstehenden Ansprüche, **dadurch gekennzeichnet, dass** eine Steigung der Schraubenfeder (56) zwischen der Steigung des Gewindes der Schraube (10; 60) im ersten Abschnitt (12;62) und der Steigung des Gewindes der Schraube (10;60) im zweiten Abschnitt ( 16;64) liegt.

7. Befestigungselement nach wenigstens einem der vorstehenden Ansprüche, **dadurch gekennzeichnet, dass** die Aufnahmebohrung (30) im Halteelement (24) eine Stufe (32) oder eine Verengung aufweist, wobei ein Innendurchmesser der Aufnahmebohrung (30) zwischen dem Halteteller (28) und der Stufe (32) oder Verengung größer ist als ein Durchmesser des Schraubenkopfes (20) und ein Innendurchmesser der Aufnahmebohrung (30) an der Stufe (32) oder Verengung kleiner ist als der Durchmesser des Schraubenkopfes (20) und größer ist als der Außendurchmesser des Schafts der Schraube (10;60).

8. Verfahren zum Befestigen von Dämmstoff an einem Untergrund, insbesondere auf einem Gebäudedach oder an einer Gebäudewand, mit einem Befestigungselement nach wenigstens einem der vorstehenden Ansprüche und mit folgenden Schritten:
- Einsetzen des Befestigungselements (22;50) in den Dämmstoff (38), so dass das freie Ende (18) der Schraube auf dem Untergrund (40) oder am Beginn einer Bohrung (42) im Untergrund (40) angeordnet ist,
- Einschrauben der Schraube (10;60) in den Untergrund (40), bis eine Unterseite des Haltetellers (28) auf der Oberseite (66) des Dämmstoffs (38) aufliegt und
- Weiteres Einschrauben der Schraube (10;60) in den Untergrund (40), bis der Halteteller (28) die Oberseite (66) des Dämmstoffs (38) im Bereich des Haltetellers (28) um einen vordefinierten Weg (y) in Richtung auf den Untergrund (40) eingedrückt hat.

9. Verfahren nach Anspruch 8, wobei der vordefinierte Weg (y) zwischen 15mm und 35 mm liegt, insbesondere 25mm beträgt.

## Claims

1. Fastening element for fastening insulating material to a substrate, in particular to a building roof or to a building wall, having a holding element (24), which has a holding disc (28) and a tubular holding portion extending from the holding disc (28), wherein the holding element (24) has a receiving bore (30) extending through the holding disc (28) and the holding portion, and having a screw (10; 60) arranged in the receiving bore (30) in certain portions, wherein the screw (10; 60) has a screw head (20) with a drive formation and has a shank which is provided with a thread at least in certain portions, wherein blocking means are provided in the receiving bore (30) and act, on the one hand, on the holding element (24) and, on the other hand, on the thread of the screw (10; 60) in order to block a movement of the holding element (24) relative to the screw (10; 60) in the direction of the screw head (20) or in a direction away from the substrate (40), **characterized in that** the thread has a plurality of portions (12, 14, 16; 62; 64) with different pitches, wherein a first pitch, in a first portion (12; 62) starting from the free end (18) of the screw (10; 60) that is situated opposite to the screw head (20), is larger than in a second portion (16; 64) which is arranged between the screw head-side end of the first portion (12; 62) and the screw head (20), and **in that** the blocking means have a helical spring (56), wherein an inside diameter of the helical spring (56) is larger than a core diameter of the thread of the screw (10; 60) and is smaller than an outside diameter of the thread of the screw (10; 60).

2. Fastening element according to Claim 1, **characterized in that** a transition portion (14) is arranged between the first portion (12) and the second portion (16).

3. Fastening element according to Claim 1 or 2, **characterized in that** the second portion (16; 64) extends up to the screw head (20).

4. Fastening element according to one of the preceding claims, **characterized in that** the helical spring (56) has less than one turn and takes the form of an open ring.

5. Fastening element according to Claim 4, **characterized in that** the helical spring (56) runs around through more than 180 degrees and less than 360 degrees, in particular through an angle between 270 degrees and 350 degrees, in particular through an angle of 310 degrees.

6. Fastening element according to one of the preceding claims, **characterized in that** a pitch of the helical spring (56) lies between the pitch of the thread of the screw (10; 60) in the first portion (12; 62) and the pitch of the thread of the screw (10; 60) in the second portion (16; 64).

7. Fastening element according to at least one of the preceding claims, **characterized in that** the receiving bore (30) in the holding element (24) has a step (32) or a narrowing, wherein an inside diameter of the receiving bore (30) between the holding disc (28) and the step (32) or narrowing is larger than a diameter of the screw head (20), and an inside diameter of the receiving bore (30) at the step (32) or narrowing is smaller than the diameter of the screw head (20) and is larger than the outside diameter of the shank of the screw (10; 60).

8. Method for fastening insulating material to a substrate, in particular to a building roof or to a building wall, with a fastening element according to at least one of the preceding claims and having the following steps:
- inserting the fastening element (22; 50) into the insulating material (38) such that the free end (18) of the screw is arranged on the substrate (40) or at the start of a bore (42) in the substrate (40),
- screwing the screw (10; 60) into the substrate (40) until an underside of the holding disc (28) lies on the upper side (66) of the insulating material (38), and
- further screwing the screw (10; 60) into the substrate (40) until the holding disc (28) has pressed in the upper side (66) of the insulating material (38) in the region of the holding disc (28) by a predefined distance (y) in the direction of the substrate (40).

9. Method according to Claim 8, wherein the predefined distance (y) is between 15 mm and 35 mm, in particular 25 mm.

## Revendications

1. Élément de fixation pour fixer un matériau isolant sur un support, notamment sur un toit de bâtiment ou sur un mur de bâtiment, comprenant un élément de retenue (24), qui présente un plateau de retenue (28) et une section de retenue tubulaire s'étendant à partir du plateau de retenue (28), l'élément de retenue (24) présentant un alésage de réception (30) s'étendant à travers le plateau de retenue (28) et la section de retenue, et comprenant une vis (10 ; 60) agencée par sections dans l'alésage de réception (30), la vis (10 ; 60) présentant une tête de vis (20) comprenant une configuration d'entraînement et une tige, qui est pourvue au moins par sections d'un filetage, des moyens de blocage étant prévus dans l'alésage de réception (30), lesquels agissent d'une part sur l'élément de retenue (24) et d'autre part sur le filetage de la vis (10 ; 60) afin de bloquer un déplacement de l'élément de retenue (24) par rapport à la vis (10 ; 60) en direction de la tête de vis (20) ou dans une direction s'éloignant du support (40), **caractérisé en ce que** le filetage présente plusieurs sections (12, 14, 16 ; 62 ; 64) ayant des pas différents, un premier pas dans une première section (12 ; 62) partant de l'extrémité libre (18) de la vis (10 ; 60) qui est opposée à la tête de vis (20) étant plus grand que dans une deuxième section (16 ; 64) agencée entre l'extrémité côté tête de vis de la première section (12 ; 62) et la tête de vis (20), et **en ce que** les moyens de blocage présentent un ressort hélicoïdal (56), un diamètre intérieur du ressort hélicoïdal (56) étant plus grand qu'un diamètre de noyau du filetage de la vis (10 ; 60) et plus petit qu'un diamètre extérieur du filetage de la vis (10 ; 60) .

2. Élément de fixation selon la revendication 1, **caractérisé en ce qu'**une section de transition (14) est agencée entre la première section (12) et la deuxième section (16).

3. Élément de fixation selon la revendication 1 ou 2, **caractérisé en ce que** la deuxième section (16 ; 64) s'étend jusqu'à la tête de la vis (20).

4. Élément de fixation selon l'une quelconque des revendications précédentes, **caractérisé en ce que** le ressort hélicoïdal (56) présente moins d'un tour et est configuré sous forme d'anneau ouvert.

5. Élément de fixation selon la revendication 4, **caractérisé en ce que** le ressort hélicoïdal (56) tourne sur plus de 180 degrés et moins de 360 degrés, notamment sur un angle compris entre 270 degrés et 350 degrés, notamment sur un angle de 310 degrés.

6. Élément de fixation selon l'une quelconque des revendications précédentes, **caractérisé en ce qu'**un pas du ressort hélicoïdal (56) se situe entre le pas du filetage de la vis (10 ; 60) dans la première section (12 ; 62) et le pas du filetage de la vis (10 ; 60) dans la deuxième section (16 ; 64).

7. Élément de fixation selon au moins l'une quelconque des revendications précédentes, **caractérisé en ce que** l'alésage de réception (30) dans l'élément de retenue (24) présente un gradin (32) ou un rétrécissement, un diamètre intérieur de l'alésage de réception (30) entre le plateau de retenue (28) et le gradin (32) ou le rétrécissement étant plus grand qu'un diamètre de la tête de vis (20) et un diamètre intérieur de l'alésage de réception (30) au niveau du gradin (32) ou du rétrécissement étant plus petit que le diamètre de la tête de vis (20) et plus grand que le diamètre extérieur de la tige de la vis (10 ; 60).

8. Procédé de fixation d'un matériau isolant sur un support, notamment sur un toit de bâtiment ou sur un mur de bâtiment, avec un élément de fixation selon au moins l'une quelconque des revendications précédentes et comprenant les étapes suivantes :
- l'insertion de l'élément de fixation (22 ; 50) dans le matériau isolant (38), de telle sorte que l'extrémité libre (18) de la vis est agencée sur le support (40) ou au début d'un alésage (42) dans le support (40),
- le vissage de la vis (10 ; 60) dans le support (40) jusqu'à ce qu'un côté inférieur du plateau de retenue (28) repose sur le côté supérieur (66) du matériau isolant (38) et
- le vissage supplémentaire de la vis (10 ; 60) dans le support (40) jusqu'à ce que le plateau de retenue (28) ait enfoncé le côté supérieur (66) du matériau isolant (38) dans la zone du plateau de retenue (28) d'une distance prédéfinie (y) en direction du support (40) .

9. Procédé selon la revendication 8, dans lequel la distance prédéfinie (y) se situe entre 15 mm et 35 mm, et est notamment de 25 mm.
